# EUROPÄISCHE PATENTSCHRIFT

(11) **EP 2 496 399 B1**
(45) Veröffentlichungstag und Bekanntmachung des Hinweises auf die Patenterteilung: **24.06.2020**
(21) Anmeldenummer: 10773328.9
(22) Anmeldetag: 03.11.2010
(51) Int. Cl.: B29C 48/25, B29C 48/885, B29C 48/92, B29C 48/90

(54) **VORRICHTUNG VERFAHREN ZUM ABDICHTEN EINES KÜHLTANKES FÜR EIN EXTRUDIERTES KUNSTSTOFFPROFIL**
DEVICE AND PROCESS FOR SEALING A COOLING TANK FOR AN EXTRUDED PLASTIC PROFILE
DISPOSITIF ET PROCÉDÉ D'ÉTANCHÉIFICATION D'UN RÉSERVOIR DE REFROIDISSEMENT POUR UN PROFILÉ EXTRUDÉ EN MATIÈRE PLASTIQUE

(30) Priorität: 06.11.2009 DE 102009046510
(43) Veröffentlichungstag der Anmeldung: 12.09.2012
(73) Patentinhaber: battenfeld-cincinnati Germany GmbH, 32547 Bad Oeynhausen (DE)
(72) Erfinder: DOHMANN, Heinrich, 37671 Höxter (DE); GESPER, Thomas, 33334 Gütersloh (DE)
(86) Internationale Anmeldenummer: PCT/EP2010/066721
(87) Internationale Veröffentlichungsnummer: WO 2011/054855

(56) Entgegenhaltungen:
- DE-A1-102005 028 087
- DE-B- 1 032 710
- GB-A- 922 504
- US-A- 2 446 620
- US-A- 3 352 563
- US-A- 4 626 183

## Beschreibung

Die Erfindung betrifft eine Vorrichtung zum Abdichten eines Extrudates zum Inneren eines Tankes, während dieses bei der Kalibrierung den Tank durchläuft, wobei die Vorrichtung an der Stirnseite des Tankes angeordnet ist und einen Ringquerschnitt aufweist, der an der Stirnseite des Kunststoffprofils anlegbar ist, wobei der Ringquerschnitt geschlossen ist und aus einem Zylinder und einem elastischen Material ausgeführt ist und so einen veränderlichen Hohlraum bildet und mit seiner äußeren Umfangsgeometrie an einer starren Vorrichtung angeordnet ist, wobei der Ringquerschnitt im Hohlraum durch Anlegen eines Unterdrucks veränderbar ist, wobei die Querschnittsänderung, bedingt durch die am äußeren Umfang des Ringquerschnittes angeordneten starren Vorrichtung, nur an den zur Mittelachse des Ringquerschnittes zugeordneten Flächenteilen erfolgt kann und bei Veränderung des Querschnittes das elastische Material entlang der Extrusionsachse mittels einer an der starren Vorrichtung angeordneten Spanneinrichtung streckbar ist, wobei eine Ventilöffnung so angeordnet ist, dass sie mit dem Hohlraum in Verbindung steht und somit ein Evakuieren des Hohlraums ermöglicht.

Bekannte Vorrichtungen sind jeweils auf bestimmte Extrudate abgestellt und können nicht universell eingesetzt werden. Insbesondere bei der Extrusion von Rohren, die sich lediglich im Durchmesser ändern, bedeutet dieser Vorrichtungswechsel einen unnötigen zusätzlichen Zeitaufwand und damit eine Erhöhung der Stillstandszeit der Anlage.

Aus dem Stand der Technik ist z.B. die GB 922 504 bekannt, die eine Abdichtvorrichtung für eine kontinuierliche Vulkanisierung eines Kabels offenbart. Die Abdichtung bei einer Querschnittsänderung des Kabels wird durch Torsion eines flexiblen Schlauches realisiert.

Aus der US 2,446,620 und der US 4,626,183 ist jeweils eine Abdichtung bekannt, bei der mittels Überdruck eine elastische Manschette gegen das Extrudat gedrückt wird.

Die Erfindung stellt sich daher die **Aufgabe**, eine Vorrichtung sowie ein diesbezügliches Verfahren anzubieten, bei der es möglich ist, eine eingesetzte Dichtung an unterschiedliche Extrudate anzupassen.

Die **Lösung** der Aufgabe für die Vorrichtung ist in Verbindung mit dem Oberbegriff des Anspruches 1 dadurch gekennzeichnet, dass die Spanneinrichtung mit Führungsstangen in Verbindung steht und dass die Führungsstangen mittels einer Feder unter Spannung stehen.

Durch diese Ausgestaltung der Vorrichtung wird eine Abdichtung zum Rohr sichergestellt und damit die Dichtheit zum Vakuum- und Kalibriertank. Durchmesserveränderungen im Rohren werden über einen großen Bereich auf einfache Weise aufgefangen. Durch die Möglichkeit das elastische Material mehr oder weniger zu strecken, sind Faltenbildungen im Ringquerschnitt ausgeschlossen und damit auch unschöne Markierungen auf der Rohrüberflächen.

Die Spanneinrichtung steht mit Führungsstangen in Verbindung, wodurch eine einfache Umsetzung des mehr oder weniger strecken des elastischen Materials möglich ist. Damit immer eine Mindestspannung am elastischen Material anliegt, sind an den Führungsstangen Federn vorgesehen. Selbstverständlich kann diese Verstellung auch elektrisch, pneumatisch oder hydraulisch erfolgen. Eine derartige Steuerung steht vorteilhafter Weise mit der Steuerung der Extruderlinie in Verbindung, damit bereits in dieser die Vorgaben für die Vorrichtung hinterlegt und somit zentral angesteuert werden können/kann.

Weiterbildungsgemäß ist der Hohlraum des Ringquerschnitts mit Luft oder Wasser gefüllt. Durch die Befüllung mit einer Flüssigkeit wird durch den hydrostatischen Druck zusätzlich Einfluss auf das Dichtverhalten an der Rohraußenwand Einfluss genommen, was bei der Wahl einer vorgegebenen Geometrie des elastischen Materials vorteilhaft sein kann. Durch die vorgegebene Geometrie können unterschiedliche Querschnitte des zu extrudierenden Profils wiedergegeben werden oder Einfluss auf die Außenfläche des Rohres genommen werden.

Mindestens ein Bereich des elastischen Materials ist so ausgelegt, dass er verschleißfester ist. Dies kann zum Beispiel dadurch erreicht werden, dass bereits bei der Herstellung des elastischen Materials, Grafit einvulkanisiert wird. Genauso ist es denkbar Gewebefäden oder eine Gewebebahn zu integrieren. Es wird dadurch erreicht, dass die besonders belasteten Flächen, nämlich die an denen das extrudierte Rohr vorbei gleitet, verschleißfester gemacht werden und somit die Standzeit der gesamten Vorrichtung erhöht wird.

Die erfindungsgemäße Vorrichtung kann bei einem Vakuumkalibriertank, aber genauso bei einem reinen Kühltank oder einer Kombination aus beiden eingesetzt werden.

Die **Lösung** des erfindungsgemäßen Verfahrens ist im Anspruch 9 wiedergegeben.

Es ist vorgesehen, dass ein hohler Ringquerschnitt in seiner Grundstellung (d.h. der hohle Ringquerschnitt nimmt seine geometrische Haltung ohne Einfluss von außen ein, damit ist beispielsweise das Einwirken von Kräften aller Art gemeint), so ausgelegt, dass er an der Außenwandung des Kunststoffrohres anliegt und somit den kleinsten Durchlassquerschnitt aufweist. Der von außen auf den Ringquerschnitt wirkende Druck ist gleich dem Innendruck im Hohlraum. Unter Normalbedingungen wäre das also im Ausgangszustand weitgehend Atmosphärendruck.

Zur Veränderung des lichten Durchlassquerschnittes für ein Profil wird der Ringquerschnitt evakuiert, es entsteht somit ein Druckgefälle von Außendruck zu Innendruck wodurch der Ringquerschnitt von der Außenwandung des Profils weggezogen wird und sich der Durchlassquerschnitt vergrößert. Damit dieses besser möglich ist, sollte die äußere Umfangsgeometrie an einer weiteren starren Aufhängung fest fixiert werden. Diese starre Aufhängung kann beispielsweise ein Zylinder sein der mit einem Flansch am Tank angeordnet ist. Das elastische Material kann mit dieser Aufhängung gemeinsam den Hohlraum bilden oder ähnlich eines Fahrradschlauches an dieser angeordnet sein.

Der Ringquerschnitt kann auch mit leichtem Überdruck beaufschlagt sein, damit der Bereich der Durchmesseranpassung größer ausgelegt werden kann. Es würde dann ein Druckgefälle von Innendruck zum Außendruck vorliegen und das elastische Material leicht gedehnt werden, wobei noch keine Faltenbildung am Ringquerschnitt entsteht.

Durch das Evakuieren des Ringquerschnittes wird der Durchlassquerschnitt vergrößert, aber der Hohlraum des Ringquerschnittes selbst wird verkleinert. Da das elastische Material sich nicht stauchen lässt, es aber zu vermeiden ist, dass es z.B. Falten bildet, wird es über eine geeignete Vorrichtung entlang der Extrusionsachse gestreckt. Die genaue Funktionsweise ist bei der Figurenbeschreibung geschildert.

Bei der Extrusion von Kunststoffprofilen ist es erforderlich, den erzeugten Kunststoffstrang nach der Formung solange in der gewünschten Form zu halten, bis dieser einen Temperaturbereich unterschritten hat und ohne Stütze formstabil ist und die naturgemäße Materialschwindung weitgehend abgeschlossen ist. Hierfür wird in aller Regel ein Vakuumtank eingesetzt, der das Profil durchläuft. Die vorgeschlagene Vorrichtung dient der Abdichtung des Inneren des Vakuumtankes, in dem ein Unterdruck vorherrscht, und der Umgebung bei Normaldruck.

In den Zeichnungen ist schematisch ein Ausführungsbeispiel der Erfindung wiedergegeben.
- Fig. 1: Teil einer Extrusionslinie und
- Fig. 2: zeigt einen Schnitt durch die erfindungsgemäße Vorrichtung,
- Fig. 3: die Vorderansicht und
- Fig. 4: eine perspektivische Darstellung des Schnitts gemäß Figur 2.

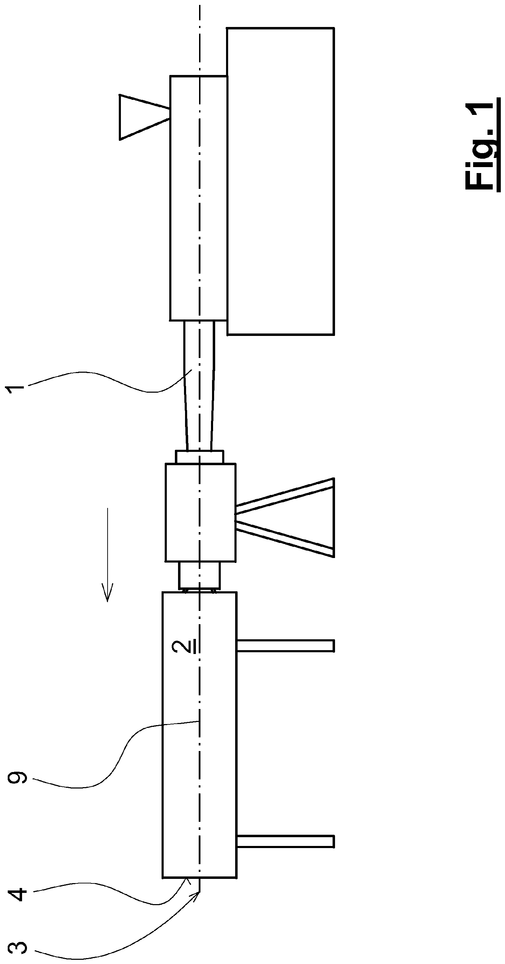

In der Figur 1 ist der Teil einer Extrusionslinie dargestellt, wobei hier nur das Ende des Vakuumtankes unter Bezug genommen wird. Die Extrusionsrichtung wird durch den Pfeil angezeigt und die gesamte Linie erstreckt sich entlang der Extrusionsachse 9. An den Vakuumtank 2 können sich weitere Nachfolgeeinrichtungen wie Abzug und Säge, hier nicht dargestellt, anschließen (also in Richtung des Pfeils). Vor dem Tank (also entgegengesetzt der Pfeilrichtung) befinden sich Extruder, Extrusionswerkzeug und Kalibrierung. Entlang dieser Extrusionsachse erstreckt sich das extrudierte Profil 1, welches sämtliche Stationen der Extrusionslinie durchläuft.

An der Stirnseite 4 des Vakuumtankes 2 ist die erfindungsgemäße Vorrichtung angeordnet (in Figur 1 nicht gezeigt) und befindet sich somit im Ausgangsbereich 3 des Vakuumtankes 2. Selbstverständlich kann sie auch analog im Eingangsbereich angeordnet sein.

Sie besteht aus einem befüllten Ringquerschnitt, wobei der Ringquerschnitt aus einem Zylinder 7 und einem elastischen Material 6, welches ein Gummischlauch oder etwas analoges sein kann, ausgeführt ist.

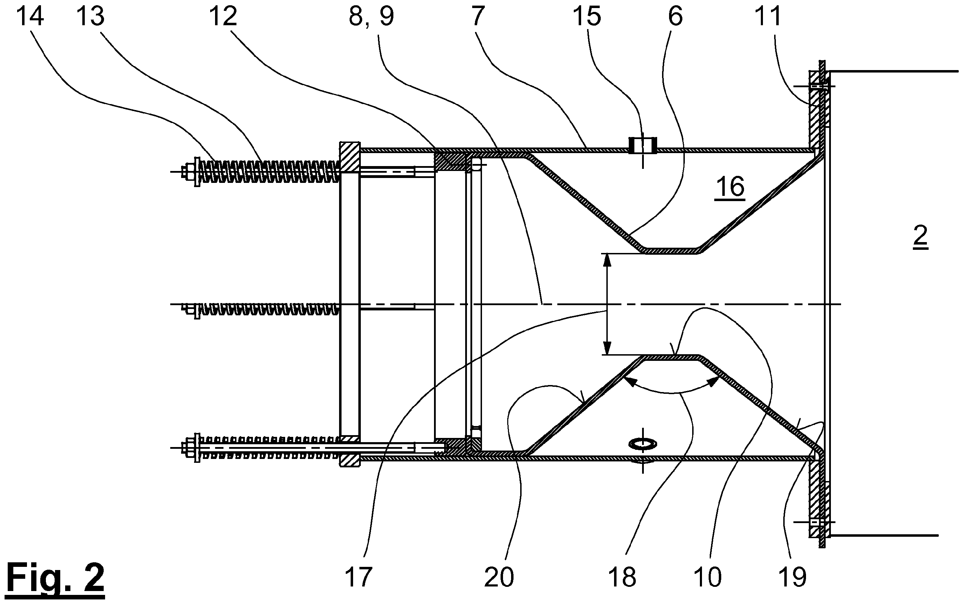

Dieser in Figur 2 im Schnitt dargestellte Ringquerschnitt, der Schnitt geht entlang der Extrusionsachse, ist um die Mittel- und Extrusionsachse 9 angeordnet und vollständig mit einem Fluid in Form von Luft oder Wasser befüllt und liegt an der Außenwandung 5 des Kunststoffprofils 1 an. Das elastische Material 6 ist somit in einem entspannten Zustand und bildet keinerlei Falten Knicke oder Ähnliches. Es ist auf der dem Tank 2 zugeordneten Seite über eine an der starren Vorrichtung 7 angebrachten Flansch 11 mit der Stirnseite 4 des Tankes verklemmt und somit fixiert.

Auf der dem Tank 2 abgewanden Seite ist das elastische Material 6 in einer Spanneinrichtung 12 ebenfalls eingeklemmt oder anderweitig fixiert. Die Spanneinrichtung 12 ist innerhalb der starren Vorrichtung, hier in Form eines Zylinders 7 verschieblich angeordnet. Der Zylinder 7 und das beidseitig eingeklemmte und fixierte elastische Material 6 bilden so einen veränderlichen Hohlraum 16, er wird durch die Zylinderwandung und die Flächen 10, 19 und 20 des elastischen Materials gebildet. Es könnte aber auch, wie weiter oben beschrieben, ein geschlossener Ringquerschnitt (Fahrradschlauch) sein, der am Zylinder 7 angeordnet ist. Die Teilringfläche 10 bestimmt den Durchlassquerschnitt 17. Wird nun ein größerer Durchlassquerschnitt 17 benötigt, wird der Hohlraum 16 evakuiert. Da es sich um ein elastisches Material handelt, kann nur dieses dem Evakuieren nachgeben und nicht der Zylinder 7. Betrachtet man die reinen Flächenschnittlinie der Flächen 10, 19 und 20 des elastischen Materials gemäß der Figur 2, so müsste die gesamte gestreckte Länge kürzer werden, wenn der Durchlassquerschnitt 17 durch das Evakuieren vergrößert wird. Da dies naturgemäß nicht möglich ist, ist vorgesehen über die Spanneinrichtung 12, mit dem ja das elastische Material 6 verbunden ist, eine Streckung in Extrusionsrichtung vorzunehmen. Der in diesem Schnitt vorhanden Winkel α zwischen den beiden Flächen 19 und 20 wird somit vergrößert.

Die Spanneinrichtung 12 steht mit Führungsstangen 13 in Verbindung die wiederum über Federn 14 unter Vorspannung gehalten werden. Durch diese Ausführung kann alleinig durch das Evakuieren die gesamte Vorrichtung gesteuert werden. Durch Evakuieren des Ringquerschnittes und damit einhergehender Veränderung des Hohlraumes 16 wird die benötigte oben beschriebene gestreckte Länge des elastischen Materials 6 zur Bildung des Hohlraumes 16 kleiner. Bedingt durch die Federbelastung der Führungsstangen 13 wird die Spanneinrichtung 12 in Extrusionsrichtung, also vom Tank, weg gezogen. Selbstverständlich ist die Federkonstante der eingebauten Federn auf die Elastizität des elastischen Materials 6 abgestimmt, damit das elastische Material 6 nicht bereits vom Profil weggezogen wird, ohne dass eine Evakuierung stattgefunden hat.

Es wird also die Befüllung im Inneren des Ringquerschnittes minimiert und somit der Ringquerschnitt evakuiert und so der freie Durchlassquerschnitt vergrößert. Der Ringquerschnitt kann sich somit universell an unterschiedliche Profildurchmesser bzw. Rohrdurchmesser anpassen.

Das Anlegen des elastischen Materials 6 an die Außenwandung 5 des Profils 1 kann durch einen oder mehrere elastische Ringe unterstützt werden. Diese Ringe wirken der Evakuierungskraft entgegen und drücken daher das elastische Material an die Außenwandung 5.

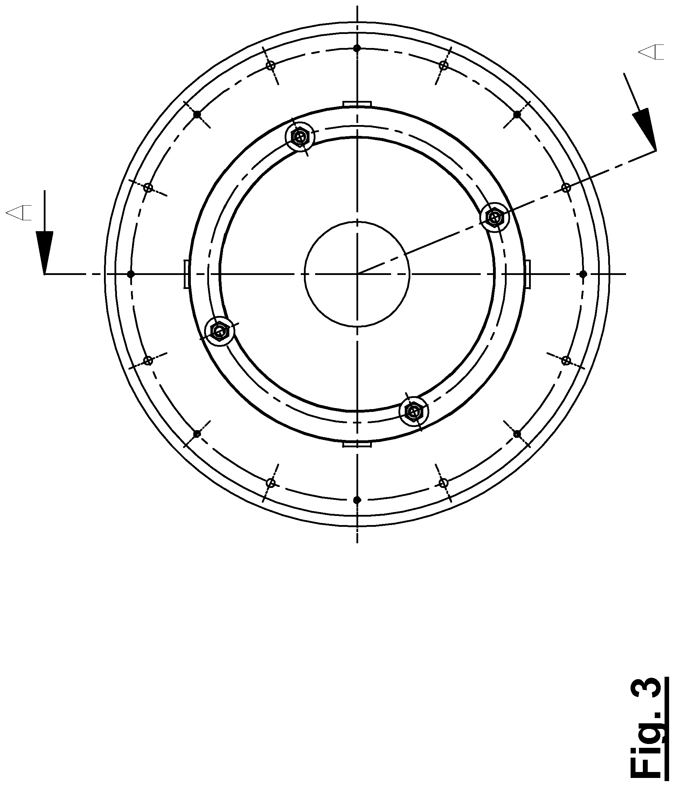

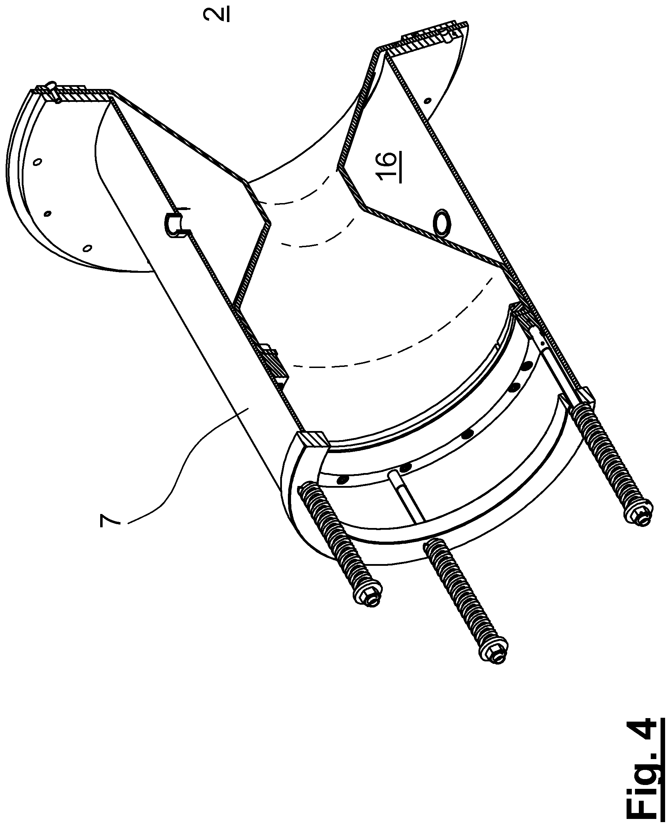

Figur 3 ist eine Seitenansicht der Vorrichtung und kennzeichnet den Schnittverlauf der Schnittdarstellung der Figuren 2 und 4.

Figur 4 zeigt die Ausführung gemäß Figur 2 in einer perspektivischen Darstellung, sodass auf die Beschreibung zu Figur 2 verwiesen wird, die dort verwendeten Bezugszeichen sind in Figur 4 übernommen worden.

Die oben beschriebene Veränderung des Durchlassquerschnittes 17 durch evakuieren des Hohlraumes 16 und verschieben der Spanneinrichtung 12, um diesen zu vergrößern, geht natürlich auch in umgekehrter Richtung. Soll ein einmal vergrößerter Durchlassquerschnitt 17 wieder verkleinert werden, wird der aufgebrachte Unterdruck minimiert, wodurch sich der veränderbare Hohlraum 16 wieder im Ringquerschnitt vergrößert und den Durchlassquerschnitt 17, der über die Teilflächen 10 des elastischen Material gebildet wird, verkleinert. Das benötigte Mehr, an elastischem Material 6, wird durch verschieben der Spanneinrichtung 12, nun entgegen der Extrusionsrichtung, bereitgestellt, da die Federn 14 nachgeben.

Zur Verschleißminimierung kann das elastische Material, vor allem im Bereich der Fläche 10, auf geeignete Art und Weise verstärkt werden. Wie bereits weiter oben beschrieben, bietet sich an Grafit, oder Grafitpartikel oder Gewebe bereits mit einzuvulkanisieren.

### Bezugszeichenliste:

- 1: Profil
- 2: Tank
- 3: Ausgangsbereich von 2
- 4: Stirnseite von 2
- 5: Außenseite von 1
- 6: elastisches Material
- 7: starre Vorrichtung
- 8: Mittelachse
- 9: Extrusionsachse
- 10: Flächenteile von 6
- 11: Flansch von 7
- 12: Spanneinrichtung an 7
- 13: Führungsstange
- 14: Feder
- 15: Ventilöffnung
- 16: Hohlraum
- 17: veränderlicher Durchmesser
- 18: Fläche von 6
- 19: weitere Fläche von 6

- α: Winkel zwischen 19 und 20
- p1: äußerer Druck
- p2: innerer Druck

## Patentansprüche

1. Vorrichtung zum Abdichten eines extrudierten Kunststoffprofils (1) im Ein- und/oder Ausgangsbereich (3) eines Tankes (2), wobei der Tank (2) Teil einer Extrusionslinie ist und bezogen auf eine Extrusionsache (9) einem Extruder, einem Extrusionswerkzeug und einer Kalibrierung nachgeordnet ist,
wobei die Vorrichtung an der Stirnseite (4) des Tankes (2) angeordnet ist und einen Ringquerschnitt aufweist, der an der Außenseite des Kunststoffprofils (1) anlegbar ist,
wobei der Ringquerschnitt geschlossen ist und aus einem Zylinder (7) und einem beidseitig eingeklemmten elastischen Material (6) ausgeführt ist und so einen veränderlichen Hohlraum (16) bildet und mit seiner äußeren Umfangsgeometrie an einer starren Vorrichtung angeordnet ist, wobei der Ringquerschnitt im Hohlraum (16) durch Anlegen eines Unterdrucks veränderbar ist,
wobei die Querschnittsänderung, bedingt durch die am äußeren Umfang des Ringquerschnittes angeordneten starren Vorrichtung (7), nur an den zur Mittelachse (8) des Ringquerschnittes zugeordneten Flächenteilen (10) erfolgt und bei Veränderung des Querschnittes das elastische Material (6) entlang der Extrusionsachse (9) mittels einer an der starren Vorrichtung angeordneten Spanneinrichtung (12) streckbar ist, wobei eine Ventilöffnung (15) so angeordnet ist, dass sie mit dem Hohlraum (16) in Verbindung steht und somit ein Evakuieren des Hohlraums (16) ermöglicht,
**dadurch gekennzeichnet, dass**
die Spanneinrichtung (12) mit Führungsstangen (13) in Verbindung steht und
dass die Führungsstangen (12) mittels einer Feder (14) unter Spannung stehen.

2. Vorrichtung nach Anspruch 1, **dadurch gekennzeichnet, dass** die Spanneinrichtung (12) elektrisch, pneumatisch oder hydraulisch betätigt bar ist.

3. Vorrichtung nach Anspruch 2, **dadurch gekennzeichnet, dass** die Steuerung der Spanneinrichtung (12) mit der zentralen Steuerung der Extruderlinie verbunden ist.

4. Vorrichtung nach einem der Ansprüche 1 bis 3, **dadurch gekennzeichnet, dass** der Hohlraum mit einem Fluid befüllt ist.

5. Vorrichtung nach Anspruch 4, **dadurch gekennzeichnet, dass** das Fluid Luft oder Wasser ist.

6. Vorrichtung nach einem der vorigen Ansprüche, **dadurch gekennzeichnet, dass** der Tank (2) ein Kalibrier- und/oder ein Kühltank ist.

7. Vorrichtung nach einem der vorigen Ansprüche, **dadurch gekennzeichnet, dass** das elastische Material (6) eine vorgegebene Geometrie aufweist.

8. Vorrichtung nach einem der vorigen Ansprüche, **dadurch gekennzeichnet, dass** das elastische Material (6) mindestens ein Bereich aufweist der verschleissminimierend ausgeführt ist.

9. Verfahren zum Abdichten eines extrudierten Kunststoffprofils (1) im Ein- und/oder Ausgangsbereich (3) eines Tankes (2) mit einer Vorrichtung nach Anspruch 1,
wobei auf den Ringquerschnitt ein äußerer Druck (p1) wirkt und im inneren des Ringquerschnitt, im Hohlraum (16), ein innerer Druck (p2) vorliegt,
wobei bei Druckgleichheit von äußerem (p1) und innerem (p2) Druck ein kleinster Durchlassquerschnitt (17) gebildet wird, wobei der Durchlassquerschnitt (17) mit Erhöhung des Druckgefälles vom äußeren Druck (p1) zum inneren Druck (p2) vergrößert wird,
und in Abhängigkeit des Druckgefälles das elastische Material (6) entlang der Extrusionsachse (9) gestreckt wird, wobei mittels der Ventilöffnung (15) der Hohlraum (16) evakuierbar ist.

10. Verfahren nach Anspruch 9, **dadurch gekennzeichnet, dass** Änderung des Durchlassquerschnittes (17) über die Steuerung der Extruderlinie umgesetzt wird.

11. Verfahren nach Anspruch 9 oder 10, **dadurch gekennzeichnet, dass** die Steuerung des Druckgefälles automatisch angepasst wird, wenn der produzierte Ist-Durchmesser vom vorgegebenen Soll-Durchmesser abweicht.

## Claims

1. Apparatus for sealing an extruded plastic profile (1) in the inlet and/or outlet section (3) of a tank (2),
the tank (2) being part of an extrusion line and being arranged downstream of an extruder, an extrusion die and a calibration in relation to an extrusion axis (9),
the apparatus being arranged at the end face (4) of the tank (2) and exhibiting an annular cross section which can be placed on the outside of the plastic profile (1),
the annular cross section being closed and comprising a cylinder (7) and an elastic material (6) wedged inside it, thus forming an adjustable hollow space (16) and being fixed to a static device with its outer perimeter geometry, the annular cross section inside the hollow space (16) being adjustable through the application of negative pressure,
due to the static surface arranged at the outer perimeter of the annular cross section, the change of the cross section taking place only at the surfaces (10) associated with the central axis (8) of the annular cross section, and
in case of a change of the cross section, the elastic material (6) being able to be stretched along the extrusion axis (9) by means of a tensioning device (12) attached to the static device,
a valve opening (15) being arranged in such a manner as to be connected to the hollow space (16), thus allowing for the evacuation of the hollow space (16),
**characterized in that**
the tensioning device (12) is connected to guide rods (13) an that
the guide rods (13) are under tension due to a spring (14).

2. Apparatus according to claim 1, **characterized in that** the tensioning device (12) can be operated electrically, pneumatically or hydraulically.

3. Apparatus according to claim 2, **characterized in that** the control of the tensioning device (12) is connected to the central control of the extrusion line.

4. Apparatus according to one of the claims 1 to 3, **characterized in that** the hollow space is filled with a fluid.

5. Apparatus according to claim 4, **characterized in that** the fluid is air or water.

6. Apparatus according to one of the preceding claims, **characterized in that** the tank (2) is a calibration and/or cooling tank.

7. Apparatus according to one of the preceding claims, **characterized in that** the elastic material (6) features has a specified geometry.

8. Apparatus according to one of the preceding claims, **characterized in that** the elastic material (6) features at least one area that is designed to minimize abrasion.

9. Process for sealing an extruded plastic profile (1) in the inlet and/or outlet section (3) of a tank (2) by means of an apparatus according to claim 1,
an external pressure (p1) acting on the annular cross section, and an internal pressure existing (p2) on the inside of the annular cross section within the hollow space (16),
a minimal outlet orifice (17) being built in case of a balance of pressure of the external (p1) and internal (p2) pressure,
the outlet orifice (17) being expanded as a function of an increase of the pressure difference between external (p1) and internal (p2) pressure and the elastic material (6) being stretched along the extrusion axis (9) as a function of the pressure difference,
the hollow space (16) being evacuable by means of the valve opening (15).

10. Process according to claim 9, **characterized in that** the adjustment of the outlet orifice (17) is implemented by means of the control of the extrusion line.

11. Process according to claim 9 or 10, **characterized in that** the control of the pressure difference is adjusted automatically whenever the produced actual diameter deviates from the specified nominal diameter.

## Revendications

1. Dispositif d'étanchéité d'un profile en plastique extrudé (1) dans la zone d'entrée et/ou de sortie (3) d'un réservoir (2),
ledit réservoir (2) faisant partie d'une ligne d'extrusion et, par rapport à une axe d'extrusion (9), étant arrangé en aval d'une extrudeuse, d'un outil d'extrusion et d'un calibrage,
le dispositif étant arrangé sur le côté frontal (4) du réservoir (2) et présentant une section annulaire qui peut être appliquée à l'extérieur du profile en plastique (1), la section annulaire étant fermée et conçue d'un cylindre (7) et d'un matériau élastique (6) coincé des deux côtés, ainsi formant une cavité variable (16) et étant arrangée à un accessoire rigide par sa géométrie périphérique,
la section annulaire à l'intérieur de la cavité (16) pouvant être modifiée par l'application d'une pression négative,
la modification de la section annulaire ne se faisant qu'aux parties de surface (10) attribuées à l'axe centrale (8) de la section annulaire à cause des accessoires rigides (7) arrangés à la périphérie extérieure de la section annulaire et
le matériau élastique (6) pouvant être étiré le long de l'axe d'extrusion (9) au moyen d'un dispositif tendeur (12) arrangé à l'accessoire rigide,
une ouverture de soupape (15) étant arrangée de telle manière qu'elle communique avec la cavité (16), ainsi rendant possible une évacuation de la cavité (16),
**caractérisé en ce que**
le dispositif tendeur (12) est relié à des barres de guidage (13) et que
lesdites barres de guidage (13) sont sous tension par un ressort (14).

2. Dispositif selon la revendication 1, **caractérisé en ce que** le dispositif tendeur (12) peut être actionné électriquement, pneumatiquement ou hydrauliquement.

3. Dispositif selon la revendication 2, **caractérisé en ce que** la commande du dispositif tendeur (12) est couplée à la commande centrale de la ligne d'extrusion.

4. Dispositif selon l'une quelconque des revendications 1 à 3, **caractérisé en ce que** la cavité est remplie d'un liquide.

5. Dispositif selon la revendication 4, **caractérisé en ce que** le liquide est de l'air ou de l'eau.

6. Dispositif selon l'une quelconque des revendications précédentes, **caractérisé en ce que** le réservoir (2) est un réservoir de calibrage et/ou de refroidissement.

7. Dispositif selon l'une quelconque des revendications précédentes, **caractérisé en ce que** le matériau élastique (6) comprend une géométrie spécifiée.

8. Dispositif selon l'une quelconque des revendications précédentes, **caractérisé en ce que** le matériau élastique (6) comprend au moins une zone qui est conçue pour minimiser l'usure.

9. Procédé d'étanchéité d'un profile en plastique extrudé (1) dans la zone d'entrée et/ou de sortie (3) d'un réservoir (2) au moyen d'un dispositif selon la revendication 1,
une pression externe (p1) étant exercée sur la section annulaire et une pression interne (p2) existant à l'intérieur de la section annulaire, dans la cavité (16),
une section de passage minimale (17) étant formée en cas d'égalité de pression la pression externe (p1) et la pression interne (p2),
ladite section de passage (17) étant élargie en fonction de la différence entre la pression externe (p2) et la pression interne (p1) et
le matériau élastique étant étiré le long de l'axe d'extrusion (9) en fonction de la différence de pression,
la cavité (16) pouvant être évacuée au moyen de l'ouverture de soupape (15).

10. Procédé selon la revendication 9, **caractérisé en ce que** la modification de la section de passage (17) est réalisée au moyen de la commande de la ligne d'extrusion.

11. Procédé selon la revendication 10 ou 11, **caractérisé en ce que** la commande de la différence de pression est ajustée automatiquement lorsque le diamètre actuel se diffère du diamètre visé.
